# EUROPEAN PATENT APPLICATION

(11) **EP 4 733 954 A1**
(43) Date of publication of application: **29.04.2026**
(21) Application number: 23945948.0
(22) Date of filing: 17.07.2023
(51) Int. Cl.: G06F 16/34, G06F 16/332, G06F 16/338, G06F 16/31, G06F 16/21, G06F 9/455, H04L 51/02, H04L 9/32, H04L 67/50

(54) **SYSTEM FOR ANALYZING DATA BY USING LARGE LANGUAGE MODEL AND METHOD FOR IMPLEMENTING SAME**

(71) Applicant: LG Electronics Inc., Yeongdeungpo-gu Seoul 07336 (KR)
(72) Inventor: KIM, Sungil, Seoul 08592 (KR); WOO, Jung Hoon, Seoul 08592 (KR)
(74) Representative: Schott, Jakob Valentin
(86) International application number: PCT/KR2023/010211
(87) International publication number: WO 2025/018438

(57) **Abstract**

The present invention relates to a technology pertaining to a system and method for analyzing data by using a large language model, and the system for analyzing data by using a large language model, according to an embodiment of the present invention, comprises: an orchestrator that provides a query message including a natural language query to an LLM server and receives an analysis code from the LLM server; and a code handler that receives the analysis code from the orchestrator and provides an execution result obtained by executing the analysis code to the orchestrator.

## Description

### Technical Field

The present invention relates to a system and method for analyzing data using a large language model.

### Background Art

Recently, various large language models have been developed and are increasingly being used in practice, leading to an increasing number of companies applying the large language models to their work. However, the large language models are configured as components separate from a company's computing systems, and since services are provided by third parties, there is a problem that security cannot be adequately maintained.

Accordingly, some companies restrict the input of corporate confidential information or information into large language models, but such restrictions reduce the utility of the large language models. Accordingly, there is a need for a method of allowing companies to use large language models while maintaining the security of their internal data.

### Disclosure

### Technical Problem

The present specification is intended to solve the above problems and is directed to using various large language models to increase the accessibility of data analysis.

In addition, the present specification is directed to enhancing data security and confidentiality when various large language models are applied.

In addition, the present specification is directed to applying various schema data including metadata to data analysis results, thereby enhancing user understanding and improving the efficiency of data analysis and decision-making.

Objects of the present invention are not limited to the above object, and other objects and advantages of the present invention which are not mentioned can be understood by the following description and more clearly understood by various embodiments of the present invention. In addition, it will be able to be easily seen that the objects and advantages of the present invention may be achieved by devices and combinations thereof that are described in the claims.

### Technical Solution

A method of analyzing data using a large language model (LLM) according to one embodiment of the present invention includes a first operation of providing, by an orchestrator, a query message including a natural language query to an LLM server and receiving analysis code from the LLM server, a second operation of providing, by the orchestrator, the analysis code to a code handler and receiving an execution result of the analysis code from the code handler, and a third operation of providing, by the orchestrator, the execution result of the analysis code to the LLM server and receiving a response message.

A method of analyzing data using a large language model (LLM) according to another embodiment of the present invention includes a first operation of providing, by an orchestrator, a query message including a natural language query to an LLM server and receiving analysis code and a response format corresponding to the query message from the LLM server, a second operation of providing, by the orchestrator, the analysis code to a code handler and receiving an execution result of the analysis code from the code handler, and a third operation of combining, by the orchestrator, the execution result of the analysis code with the response format to generate a response message.

A system for analyzing data using a large language model (LLM) according to one embodiment of the present invention includes an orchestrator configured to provide a query message including a natural language query to an LLM server and receive analysis code from the LLM server, and a code handler configured to receive the analysis code from the orchestrator and provide an execution result of the analysis code to the orchestrator.

### Technical Effects

According to the present invention, non-expert users can perform data analysis while simultaneously meeting confidentiality and security requirements for company data.

According to the present invention, the accessibility of data analysis can be enhanced by using large language models.

According to the present invention, data security and confidentiality can be maintained when various large language models are applied.

According to the present invention, by applying various schema data including metadata to data analysis results, it is possible to enhance user understanding and enhance the efficiency of data analysis and decision-making.

According to the present invention, it is possible to enhance the efficiency of corporate data-based decision-making processes.

Effects of the present invention are not limited to the above effects, and various effects of the present invention can be easily derived from the configuration of the present invention.

### BRIEF DESCRIPTION OF THE DRAWINGS

FIG. 1 is a view illustrating the overall components according to one embodiment of the present invention.
FIG. 2 is a view illustrating a process of analyzing a question entered in natural language and generating a result corresponding to the question according to one embodiment of the present invention.
FIG. 3 is a view illustrating detailed operations according to one embodiment of the present invention.
FIG. 4 is a view illustrating a process of generating results by querying dryer-related information in natural language according to one embodiment of the present invention.
FIG. 5 is a view illustrating a configuration of schema data of a database related to a dryer according to one embodiment of the present invention.
FIG. 6 is a view illustrating a process using a hierarchical structure according to one embodiment of the present invention.
FIG. 7 is a view illustrating a configuration of the schema data including authorization information according to one embodiment of the present invention.
FIG. 8 is a view illustrating a process of checking authorization and answering a query according to one embodiment of the present invention.

### DETAILED DESCRIPTION OF THE INVENTION

Hereinafter, embodiments of the present invention will be described in detail with reference to the accompanying drawings so that those skilled in the art to which the present invention pertains can easily carry out the present invention. The present invention may be implemented in various different forms and is not limited to various embodiments described herein.

To clearly describe the present invention, parts not related to the description have been omitted, and the same or similar components are denoted by the same reference numerals throughout the specification. Hereinafter, some embodiments of the present invention will be described in detail with reference to exemplary drawings. In adding reference numerals to components in each drawing, the same components may have the same reference numerals as much as possible even when they are shown in different drawings. In addition, in the description of the present invention, when it is determined that a detailed description of a related known configuration or function may obscure the gist of the present invention, detailed description thereof may be omitted.

In the description of the components of the present invention, terms such as "first," "second," "A," "B," "(a)," "(b)," and the like may be used. These terms are only for the purpose of distinguishing one component from another component, and the nature, sequence, order, or the like of the corresponding component is not limited by these terms. When a certain component is described as being "connected," "coupled," or "joined" to the other component, the component may be directly connected or joined to the other component, but it should be understood that another component may be "interposed" between the components, or the components may be "connected," "coupled," or "joined" through another component.

In addition, the components may be sub-divided for convenience of description in implementing the present invention, but these components may be implemented within a single device or module, or a single component may be implemented by being divided into multiple devices or modules.

Recently, research and industrial applications of artificial intelligence models that process natural language input and produce results based on a large language model (LLM) are increasing. Since the LLM processes information input by users in natural language and provides corresponding results, when the users input queries appropriately for LLM information processing, the accuracy of the results increases.

Systems for constructing databases to store and process various types of data use the corresponding databases to retrieve data. However, advanced technical skills are required to enter queries to retrieve data stored in the database or analyze results. This may be a barrier to the usability of the data stored in the database.

Accordingly, the present specification describes a configuration in which analysis is performed on user input in natural language, such as by an LLM, and a response including corresponding results from a database is generated.

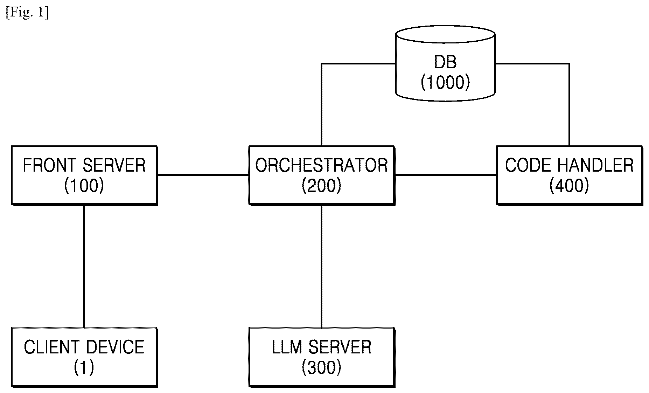

FIG. 1 is a view illustrating the overall components according to one embodiment of the present invention.

A client device 1 is a device for entering queries and checking results, and examples thereof include various devices used by users, such as a computer, a laptop, a tablet, a mobile device, etc. The users may use the client device 1 to enter queries about data and receive and check the corresponding analysis results.

A front server 100 receives queries in natural language from the client device 1. The front server 100 may communicate with the client device 1 based on various interfaces.

The front server 100 receives queries in natural language from the client device 1, transmits the queries to an orchestrator 200, and provides the analysis results returned from the orchestrator 200 to the client device 1. According to one embodiment of the present invention, the front server 100 may provide a chatbot interface to enhance user convenience. The front server 100 may provide a web interface and may be implemented as a chat application such as Slack, MS Teams, etc.

For example, when the client device 1 transmits queries using the web, the front server 100 may implement a web interface. Alternatively, when the client device 1 transmits the queries using a predetermined application, the front server 100 may be implemented as a server for performing communication in response to the corresponding application. The front server 100 may provide a query message including a natural language query to the orchestrator 200.

In an embodiment, the orchestrator 200 may be independently configured hardware or software installed on a server. The orchestrator 200 analyzes the user's query, requests data analysis code corresponding to the corresponding query from an LLM server 300, interprets an output from the LLM server 300, and causes a code handler 400 to execute the analysis code.

In an embodiment, the orchestrator 200 provides the query message to the LLM server 300. In this case, the orchestrator 200 provides a schema of the database 1000 to the LLM server 300.

The LLM server 300 generates analysis code capable of processing the query message and provides the analysis code to the orchestrator 200. In this case, the analysis code is required to execute a database query on the database 1000.

The LLM server 300 generates appropriate data analysis code based on the user's query and schema data provided by the orchestrator 200. In an embodiment, the LLM server 300 uses ChatGPT, another LLM, or various natural language processing servers.

The analysis code is generated by the LLM server 300 by reflecting the schema of the database 1000. The orchestrator 200 provides the analysis code to the code handler 400. Thereafter, the code handler 400 applies the analysis code to the database 1000 and provides execution results to the orchestrator 200.

That is, the code handler 400 executes the analysis code provided by the orchestrator 200 and returns the results to the orchestrator 200.

In addition, when the orchestrator 200 provides the execution results back to the LLM server 300, the LLM server 300 provides the orchestrator 200 with a response message corresponding to the query message. The orchestrator 200 transmits the response message to the front server 100, and the front server 100 provides the response message to the client device 1.

In the configuration of FIG. 1, the front server 100, the orchestrator 200, the code handler 400, and the database 1000 may be configured as an internal system. In addition, the LLM server 300 may be a separate external system disposed externally. Of course, an LLM package may be included in the internal system.

The orchestrator 200 may be implemented as a single component including the code handler 400. In addition, the orchestrator 200 may receive query messages directly from the client device 1 without the front server 100.

In the configuration of FIG. 1, the LLM server 300 does not access data stored in the database 1000 but simply uses the schema of the database 1000 to generate results, thereby maintaining the security of the data stored in the database 1000.

In addition, even when the user may not handle database queries or write code related to the database 1000, the user may retrieve the data stored in the database 1000 or check the results during the process of checking the data stored in the database 1000.

In the configuration of FIG. 1, in one embodiment of the present invention, the orchestrator 200 and the code handler 400 may be configured as a single system. In addition, in another embodiment, the orchestrator 200, the code handler 400, and the database 1000 may be configured as a single system.

Alternatively, the front server 100 may be included in the single system.

In addition, the LLM server 300 may be separately disposed externally from the orchestrator 200 and may process natural language queries.

Alternatively, the LLM server 300 may be disposed in the same internal system area as the orchestrator 200 and may process natural language queries.

However, regardless of the position of the LLM server 300, the LLM server 300 may not access the database 1000, and thus even when the LLM server 300 is used as an external service or leased, the security of the data stored in the database 1000 can be maintained.

Various external companies may provide the LLM server 300. Accordingly, a company owning the database 1000 can enhance both the data security and data usability of the database 1000 by combining the orchestrator 200 with various LLM services.

The LLM services include, for example, services provided by various companies, such as ChatCGP, bard, Bing, etc., but the present invention is not limited thereto, and the LLM services also include cases in which a company purchases and customizes an LLM module.

The orchestrator 200 effectively processes user queries, performs appropriate analysis, provides the results to the user, and maintains data security and confidentiality.

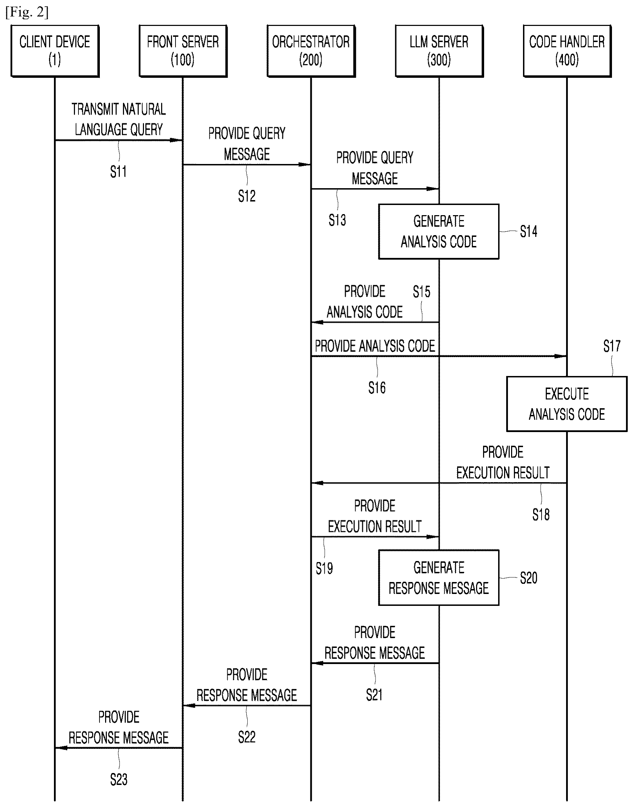

FIG. 2 is a view illustrating a process of analyzing a question entered in natural language and generating a result corresponding to the question according to one embodiment of the present invention.

The client device 1 transmits a natural language query to the front server 100 (S11). In an embodiment, the natural language query is text, but may also include non-text data such as voice.

The front server 100 generates a query message including the received query and transmits the query message to the orchestrator 200 (S12). Alternatively, in an embodiment, the client device 1 may generate a query message including a natural language query or non-text data and then transmit the query message to the front server 100, and the front server 100 may transmit the query message to the orchestrator 200.

In addition, depending on the system architecture, the orchestrator 200 may receive the query message from the front server 100 or directly from the client device 1 without the front server 100.

Thereafter, the orchestrator 200 provides a query message including a natural language query to the LLM server 300 (S13) and receives analysis code from the LLM server 300 (S15). During this process, the LLM server 300 may generate analysis code based on the schema of the database 1000, the scope or characteristics of the data stored in the database 1000, a hierarchical structure, etc. (S14).

Thereafter, the orchestrator 200 provides the analysis code to the code handler 400 (S16). The code handler 400 executes the analysis code, derives results from the database 1000 (S17), and provides execution results of the analysis code to the orchestrator 200 (S18).

The orchestrator 200 provides the execution results of the analysis code to the LLM server 300 (S19). The LLM server 300 generates a response message in natural language based on the corresponding results (S20) and provides the response message to the orchestrator 200 (S21).

Thereafter, the orchestrator 200 provides the response message to the front server 100 (S22), and the front server 100 transmits the response message to the client device 1 (S23).

The embodiment of FIG. 2 may be applied as follows. When performing analysis on customer electronic device usage behavior within a company, results may be derived by extracting information stored in a database in response to a natural language query, without creating a database query or writing code for a database in which customer electronic device usage data is stored. In addition, the LLM server 300 may provide a response message by reflecting the schema of the database of the information stored in the database.

In an information processing process of a company adopting an IT system, as the products and services provided by the company may be digitized and connected online, the company may accumulate large amounts of data in the database 1000.

The accumulated data can be effectively used to automate work processes and improve the quality of management decision-making and applied to product/service planning and development. However, conventionally, the information stored in the database 1000 can be acquired by skilled database administrators or programmers, and otherwise, access is limited through in-house infrastructure tools.

In addition, due to the size and complexity of the data, big data processing and data analysis capabilities are required, and due to strengthened personal information protection laws and the like, data accessibility for company employees is low, which limits data utilization by field staff.

However, by applying the orchestrator 200 of the present invention, even users without any background knowledge may intuitively perform data analysis through a chatbot-style interface. In addition, customer data, which should be maintained and retrieved internally, may be analyzed without having to download the customer data directly from an external source, thereby enhancing the safety and security of personal information and security.

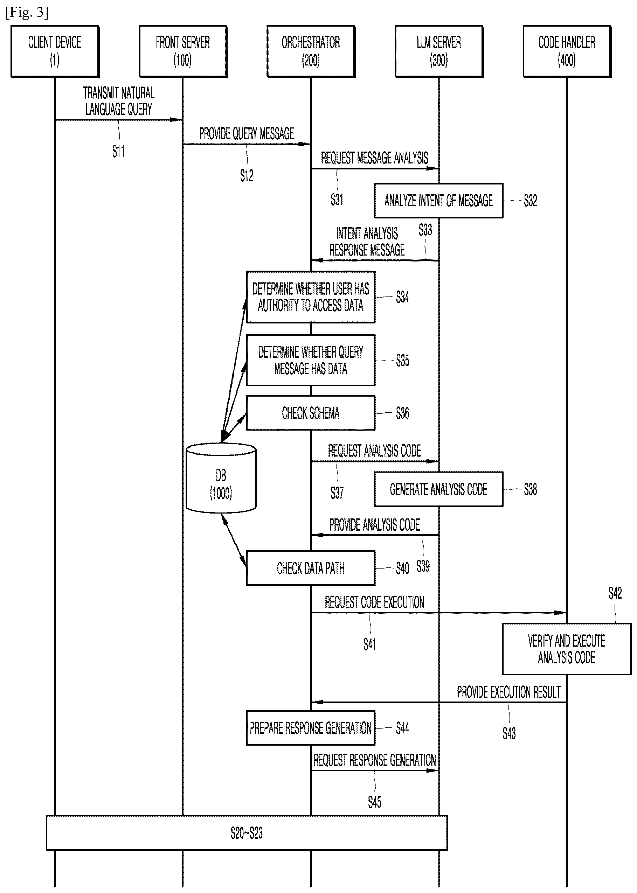

FIG. 3 is a view illustrating detailed operations according to one embodiment of the present invention. This embodiment is further subdivided from the embodiment of FIG. 2 to include checking data access authorization and schema information.

Operations S11 and S12 are the same as those described above with reference to FIG. 2. Here, it is assumed that an example of a natural language query transmitted by the client device 1 is "Tell me the average daily usage time of the dryer."

The orchestrator 200 requests message analysis from the LLM server 300 (S31). The LLM server 300 analyzes the intent of the message (S32) and provides an intent analysis response message (S33). The intent analysis response message may be configured as follows:
Intent analysis response message={"Product=Dryer," "Content:Average daily usage time"}

Alternatively, the intent analysis response message may be further subdivided as follows:
Intent analysis response message={"Product=Dryer," "Content:Usage," "Baseline=Average," "Period:Daily"}

Based on the intent analysis response message, the orchestrator 200 uses identification information of the client device 1 to determine whether the client device 1 has the authority to retrieve data (S33). In addition, the orchestrator 200 determines whether the query message includes desired data (S35). For example, this is because a response to the query message cannot be provided when the usage data related to the dryer is not stored.

In addition, when it is determined that the data is present, the orchestrator 200 determines the schema of the database 1000 (S36). In addition, the orchestrator 200 requests analysis code from the LLM server 300 (S37). During this process, the orchestrator 200 may provide the LLM server 300 with the schema of the database 1000.

Alternatively, when the orchestrator 200 has previously provided the schema data of the database 1000 to the LLM server 300, the process of providing the schema data may be omitted. The LLM server 300 performs intent analysis of the query message in operation S31 or generates analysis code using the analysis results in operation S32 (S38). In addition, the LLM server 300 provides the generated analysis code to the orchestrator 200 (S39).

The orchestrator 200 determines a data path of the database 1000 to which the analysis code will be applied (S40) and requests the code handler 400 to execute the code (S41). During the process of requesting code execution, the orchestrator 200 may transmit the analysis code received in operation S39 and the data path determined in operation S40 to the code handler 400.

In an embodiment, the code handler 400 uses Python, Java, Perl, etc., but is not limited thereto.

The code handler 400 determines whether the analysis code is executable and then executes the analysis code (S42). The analysis code executed by the code handler 400 is the execution result of the natural language query in operation S11, and the code handler 400 derives a code execution result value. Accordingly, the code handler 400 provides the execution results to the orchestrator 200 (S43).

Upon receiving the execution results, the orchestrator 200 prepares to generate a response (S44) so as to provide this result value as a response and requests the LLM server 300 to generate the response (S45). In this case, the orchestrator 200 may provide both the query message in operation S31 and the execution results in operation S43 to the LLM server 300 during the process of requesting response generation.

Alternatively, the orchestrator 200 and the LLM server 300 share identification information for each query message. Accordingly, the LLM server 300 may identify which query message the execution results correspond to. Alternatively, the orchestrator 200 and the LLM server 300 may maintain a thread corresponding to the query message, and the orchestrator 200 may request analysis code or response generation through the thread corresponding to a single query message.

After operation S45, operations S20 to S23 in FIG. 2 are performed.

In the above embodiment, the analysis code is executed in the company's internal analysis/development environment based on the dataset of the database 1000 of the company by the code handler 400. The generated analysis results are converted into a response in a form that may be understood by a user through the LLM server 300 again (S45, S20).

A process in which a user asks a question in natural language and analysis results corresponding thereto are provided back to the user in text form may be implemented through an API communication scheme among components that constitute the system, but the present invention is not limited thereto. Each component may be implemented in an encapsulated manner, and the LLM server 300 may be replaced with or configured to employ different models as needed.

According to the above embodiment, convenience beyond conventional data analysis methods is provided to allow the user to ask a question in natural language and check the resulting data analysis results, thereby enhancing the possibilities and efficiency of natural language-based information processing.

A response message to the previously presented example of the natural language query, "Tell me the average daily usage time of the dryer" may be "The average daily usage time of the dryer is 80 minutes."

For example, when the execution result provided in operation S43 is "80," in operations S44 and S45, the LLM server 300 may generate a response message corresponding to the result of "80" by linking the content of the query message.

When the example of the natural language query is "Tell me the number of users who use a dryer daily" and the execution result provided in operation S43 is "80," in operations S44 and S45, the LLM server 300 may generate a response message, "There are 80 users who use a dryer daily," in response to the result of "80" by linking the content of the query message.

That is, the LLM server 300 may understand the query message provided by the orchestrator 200 and automatically generate appropriate analysis code to resolve the query message based on the schema of the data provided by the orchestrator 200. In addition, the orchestrator 200 and the LLM server 300 may share information related to the context, synonyms, and similarity of the query message.

For example, the orchestrator 200 may provide the LLM server 300 with information such as department information of the client device 1 that transmits the query message, identification information of query messages previously transmitted by the client device 1, etc., thereby increasing the accuracy of the LLM server 300 in analyzing the intent of the query message. As a result, data results can be easily reviewed within the company without having to add explanations each time.

In addition, the orchestrator 200 provides the schema of the database 1000 to the LLM server 300, and the data stored in the database 1000 is not shared with the LLM server 300, allowing the company to maintain the confidentiality of its data.

That is, the company's data is not directly leaked to external or purchased modules, such as the LLM server 300, thereby preventing the possibility of leaking original customer or management data of the company. In addition, when a user requests analysis, the orchestrator 200 may check the user's authority for access to the data and control members' access to data that should be kept secure within the company (e.g., profit and loss, sales, sales volume, etc.).

In particular, the orchestrator 200 provides the query message to the LLM server 300 and then receives keywords for the query message from the LLM server 300 (S33). During this process, the orchestrator 200 determines whether the client device 1 has the authority corresponding to the keywords, and if so, requests and receives analysis code corresponding to the query message from the LLM server 300 (S37 to S39).

For example, when the client device 1 has only basic query authority related to an air conditioner and the client device 1 requests information related to a dryer, the orchestrator 200 may determine that the client device 1 lacks authority to access the information related to the dryer.

Hereinafter, a process of processing query data related to a dryer will be described.

First, two assumptions are made regarding a database table related to the dryer.

The configuration of the table "Dryer_Info," which includes information such as dryer identification information, dryer user information, a city or country in which the dryer is disposed, and a dryer model, is as shown in Table 1.

**[Table 1]**

| | | | | | |
|---|---|---|---|---|---|
| D_Machine_ID | User_Age | City_Loc | Country_Loc | Machine_Model | Version |

Columns that constitute the Dryer_Info table are described below, and these descriptions are also metadata and may constitute schema data of a database.

D_Machine_ID denotes dryer identification information, and User_Age denotes the age information of a dryer user. City_Loc denotes identification information of the city in which the dryer is disposed, and Country _Loc denotes identification information of the country in which the dryer is disposed. Machine_Model denotes the dryer's model name, and Version denotes the software version installed on the dryer.

Meanwhile, the configuration of the "Dryer Usage" table, which generates data for each dryer use, is shown in Table 2.

**[Table 2]**

| | | | | | | |
|---|---|---|---|---|---|---|
| D_Machine_ID | Start_T | End_T | Duration | Course | Level | ErrorCode |

Columns that constitute the Dryer Usage table are described as follows, and these descriptions are also metadata and may constitute schema data of a database.

D_Machine ID denotes dryer identification information, Start_T denotes the time the dryer starts operating, End_T denotes the time the dryer ends operating, Duration denotes the time the dryer takes to perform one operation, Course and Level denote the dryer's operating course and intensity, and ErrorCode denotes the error code that occurs during the dryer's operation.

The orchestrator 200 may pre-store the table names of Tables 1 and 2, metadata about the information stored in the tables, and the format and information of the data stored in each table as the schema of the corresponding database and provide the schema of the database to the LLM server 300.

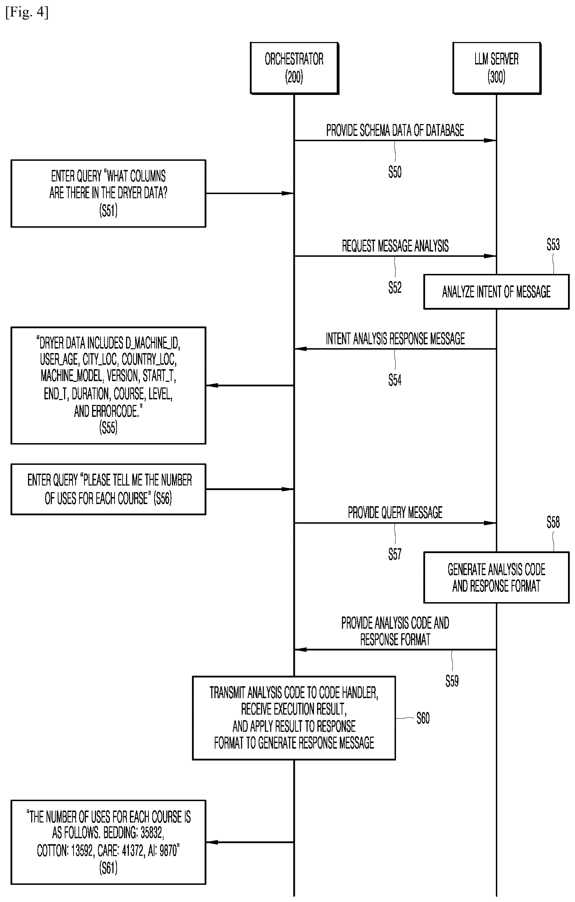

Unlike FIG. 2, when the LLM server 300 provides a response format as illustrated in FIG. 4, which will be described below, the security of the analysis results can be maintained. Accordingly, depending on the presence of the security of the query message results, the orchestrator 200 may request the LLM server 300 to generate a response message in the same manner as that illustrated in FIG. 2, or request the LLM server 300 to provide a response format.

In an embodiment, the response format may be configured such that the text of the response, which includes the execution results of the analysis code, has an area in which the result values may be inserted, indicated by a special character or the like. For example, the execution results of the analysis code may be instructed to be included in a variable name between the characters "%."

According to the above embodiment, the orchestrator 200 and the LLM server 300 may process the user's query and generate the analysis code. The LLM server 300 may parse and understand the user's query and generate data analysis code that answers the user's query using the schema data of the database provided by the orchestrator 200.

The orchestrator 200 does not provide the entire database, but may provide the LLM server 300 with only schema data including information about tables that constitute the database, information about columns (fields) that constitute the tables, and metadata about these tables, enabling the LLM server 300 to generate analysis code without accessing internal data.

The orchestrator 200 analyzes the user's query and requests the LLM server 300 to generate analysis code. The orchestrator 200 executes and processes the analysis code returned by the LLM server 300 directly or through the code handler 400. In addition, the orchestrator 200 may return the execution results of the analysis code to the user.

FIG. 4 is a view illustrating a process of generating results by querying dryer-related information in natural language according to one embodiment of the present invention. Since the processes of FIGS. 2 and 3 are applied, the description in FIG. 4 will focus on the information shared between the orchestrator 200 and the LLM server 300.

The orchestrator 200 provides the LLM server 300 with the schema data of the database (S50). The orchestrator 200 may provide the LLM server 300 with the schema data of the database, which includes the names of the dryer-related tables in Tables 1 and 2, the names of columns (fields) that constitute the tables, metadata regarding the values stored in each column, etc.

Thereafter, when the client device 1 enters a query such as "What columns are there in the dryer data?," the query is transmitted directly to the orchestrator 200 with or without passing through the front server 100 (S51). The orchestrator 200 provides the query in operation S51 to the LLM server and requests message analysis (S52).

In addition, the LLM server 300 analyzes the intent of the message (S53), generates an intent analysis response message querying information that constitutes the database related to the dryer, and provides the intent analysis response message to the orchestrator 200 (S54). This process may correspond to operations S13 to S21 in FIG. 2 or operations S31 to S45, S20, S21, etc. in FIG. 3.

When the response is performed on the schema data of the database, the LLM server 300 may use the schema data provided in operation S50 to produce results without generating separate analysis code.

An example of the intent analysis response message may be a listing of the names and column information of the dryer tables provided in operation S50. The intent analysis response message may be "Dryer data includes D_Machine_ID, User_Age, City_Loc, Country_Loc, Machine_Model, Version, Start_T, End_T, Duration, Course, Level, and ErrorCode." In addition, the orchestrator 200 transmits this message to the client device 1 or the front server 100. As a result, the client device 1 may check the columns of the dryer data, as in operation S55.

Thereafter, when the client device 1 enters a query, "Please tell me the number of uses for each course," the query is transmitted directly to the orchestrator 200 with or without passing through the front server 100 (S56).

The LLM server 300 generates a database query (analysis code) that counts the number of uses for each course in Table 2 and generates a response format to include results (S58). In an embodiment, the analysis code may be, for example, a database query execution statement that counts by "Course" in the "Dryer Usage" table.

For example, the orchestrator 200 may provide values for "Course" in the schema data as {"BEDDING," "COTTON," "CARE," "AI"}. In this case, the LLM server 300 may generate four analysis codes (Code1, Code2, Code3, Code4).
Code1="SELECT COUNT (*) as cnt1 FROM Dryer_Usage WHERE Course = "BEDDING"
Code2="SELECT COUNT (*) as cnt2 FROM Dryer Usage WHERE Course = "COTTON"
Code3="SELECT COUNT (*) as cnt3 FROM Dryer Usage WHERE Course = "CARE"
Code4="SELECT COUNT (*) as cnt4 FROM Dryer Usage WHERE Course = "AI"

In addition, in an embodiment, the response format is configured such that the response message includes the number of times information corresponding to each response. For example, the LLM server 300 may generate the response format as follows.

"The number of uses for each course is as follows. BEDDING: %cnt1%, COTTON: %cnt2%, CARE: %cnt3%, AI: %cnt4%"

The LLM server 300 provides the analysis code and the response format to the orchestrator 200 (S59). The orchestrator 200 transmits the analysis code to the code handler, receives the execution results, and applies the results to the response format to generate a response message (S60). For example, it is assumed that the code handler 400 executes Code1, Code2, Code3, and Cod3 4, and returns results as 35832 for cnt1, 13592 for cnt2, 41372 for cnt3, and 9870 for cnt4.

The orchestrator 200 enters the results previously returned to the response format, generates a response message as follows, and transmits the response message to the client device 1 or the front server 100. As a result, the client device 1 may display the number of uses for each course of the dryer as in operation S61.

"The number of uses for each course is as follows. BEDDING: 35832, COTTON: 13592, CARE: 41372, AI: 9870"

When S57 to S61 in FIG. 4 are classified in detail, the orchestrator 200 provides a query message including a natural language query to the LLM server 300 and receives analysis code and a response format corresponding to the query message from the LLM server 300 (S57, S58, S59).

The orchestrator 200 provides the analysis code to the code handler 400 and receives the execution results of the analysis code from the code handler 400, and then the orchestrator 200 combines the execution results of the analysis code with the response format to generate a response message (S60).

When using the response format, the orchestrator 200 requests the LLM server 300 to provide response messages according to the execution results (operations S19 to S21 in FIG. 2 or operations S44, S45, and S21 in FIG. 3) may be included in operation S58.

The embodiment of FIG. 4 illustrates the result of counting the type of data or the number of data stored in the database based on the user's query. The above embodiment may be applied to processing the client device 1 asking about the time required to use a dryer based on the user's age, or about the number of times the dryer is used based on the user's city or country of residence.

In addition, Tables 1 and 2 are related to the dryer, and the database 1000 may maintain tables related to an air conditioner, a washing machine, a dishwasher, etc. in addition to the dryer. In this case, the client device 1 may ask about the number of users who own both an air conditioner and a dryer, and the orchestrator 200 may provide an answer.

As illustrated in FIG. 4, when the LLM server 300 dynamically generates analysis code to provide an answer to the user's question and the code handler 300 executes the analysis code, the execution results of the analysis code may be an answer corresponding to the user's question. Such an answer may be included in the response message and transmitted to the client device 1, and the user may check the data analysis results.

According to the above embodiment, company employees who wish to analyze data may perform data analysis without complex statistical techniques, programming knowledge, or using database queries. As a result, the analysis and utilization possibility of data accumulated within the company can be increased.

In addition, since the orchestrator 200 provides only the schema data of the database to the LLM server 300, the data is protected within an in-house system. As a result, analysis may be performed without exposing sensitive company data to the outside, allowing the LLM service to be used while maintaining data security and confidentiality.

In the embodiment of FIG. 4, a user may ask questions about data in natural language. The user may access the chatbot and ask questions about the data, and the user's questions may take various forms. The user may request analysis necessary to resolve questions about specific data, find relationships between data, or identify specific patterns, which is transmitted to the orchestrator 200 in the form of a query message including a natural language question.

The orchestrator 200 and the LLM server 300 process the question and generate analysis code. The LLM server 300 determines the intent and meaning of the question from the user's question and based on this, generates appropriate analysis code for the data. During this process, the orchestrator 200 provides only the schema data for the database to the LLM server 300 and does not provide the actual stored data (actual stored values) to the LLM server 300. As a result, data security and confidentiality can be maintained.

The LLM server 300 generates analysis code corresponding to the user's query using only schema data (columns and descriptions of each column) that defines or describes tables and columns that constitutes the database and their relationships, access authorities, etc. The orchestrator 200 communicates with the LLM server 300 and provides the analysis code provided by the LLM server 300 to the code handler 400 to obtain code execution results.

The analysis code generated by the LLM server 300 is executed in an in-house analysis/development environment based on a dataset stored in an in-house database. The code handler 400 executes the analysis code to derive analysis results that meet the user's requirements.

The analysis results may be processed in a form that may be understood by the user, and the LLM server 300 may also generate a response message including the results. Alternatively, the orchestrator 200 may generate a response message by inserting the results produced by the code handler 400 into the response format provided by the LLM server 300.

The orchestrator 200 provides the analysis code generated by the LLM server 300 to the code handler 400, and the code handler 400 provides the execution results of the analysis code to the client device 1.

In an embodiment of the method of transmitting results, the orchestrator 200 provides the execution results of the analysis code to the LLM server 300. The LLM server 300 converts the analysis results into a response message in a form that may be understood by the user. The response message is provided to the client device 1 via a chatbot interface or the like. Accordingly, the user may obtain an answer to the original question.

In addition, in another embodiment of the method of transmitting results, when the LLM server 300 provides the analysis code and the response format to the orchestrator 200, the orchestrator 200 uses the analysis code and the response format to enter the execution results of the analysis code into the response format to generate a response message.

In the embodiment of the present invention, the orchestrator 200 can secure data security and confidentiality by providing only the schema (schema data) of the database to the LLM server 300 without providing the actual data. Since the LLM server 300 is in a state of being respondable based on the schema data regarding the structure and characteristics of the tables and columns that constitute the database, and may generate the analysis code necessary for the code handler 400 to extract information from the database.

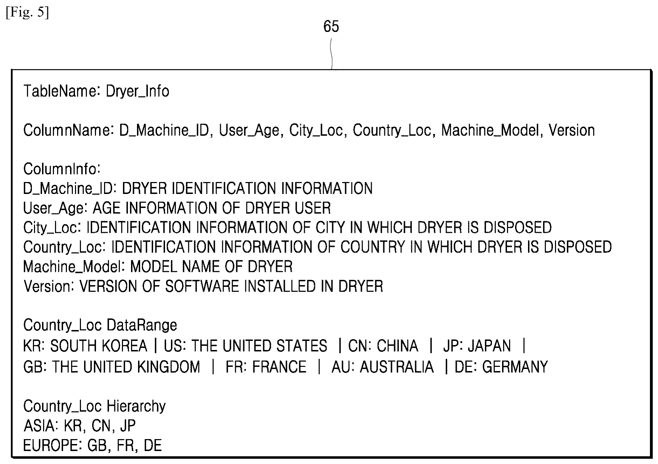

FIG. 5 is a view illustrating a configuration of schema data of a database related to a dryer according to one embodiment of the present invention.

The schema data generated by the orchestrator 200 for Table 1 is as shown in 65. The orchestrator 200 sets the table name to "Dryer_Info" and includes the column names "D_Machine_ID, User_Age, City_Loc, Country_Loc, Machine_Model, Version" and descriptions of each column in the "ColumnName" and "ColumnInfo" fields, respectively.

In addition, the orchestrator 200 includes examples of values that may be stored in the "Country_Loc" column in the "Country_Loc DataRange" field. As illustrated in FIG. 5, the data that may be entered in the "Country_Loc" column are two alphabetic characters representing each country. The orchestrator 200 includes the country names corresponding to each alphabetic character in the schema data, as follows:
"KR: South Korea | US: The United States | CN: China | JP: Japan | GB: The United Kingdom | FR: France | AU: Australia | DE: Germany

When a country is added, the orchestrator 200 may update the schema data and provide the updated schema data to the LLM server 300.

In addition, the orchestrator 200 may include a hierarchical structure of values of "Country_Loc" in the schema data. For example, "Dryer_Info" has only a column for countries, but since queries by continent may arise in the future, the orchestrator 200 organizes the values of "Country_Loc" hierarchically.

This is presented in the "Country_Loc Hierarchy" field, with codes for countries in Asia being "KR, CN, JP" and codes for countries in Europe being "GB, FR, DE."

The orchestrator 200 may provide the LLM server 300 with the schema data 65 configured as illustrated in FIG. 5. That is, the schema data may include descriptions of the columns that constitute the table, the range or values of data that may be stored in each column, etc.

In addition, the schema data may include a hierarchical structure of data stored in columns, as described in "Country_Loc Hierarchy."

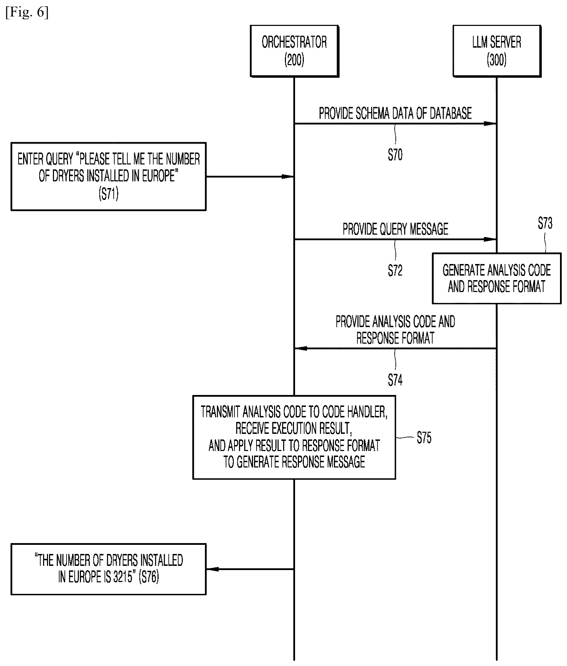

FIG. 6 is a view illustrating a process using a hierarchical structure according to one embodiment of the present invention.

The orchestrator 200 provides the schema data 65 in FIG. 5 to the LLM server 300 (S70). Thereafter, when the client device 1 enters a query, "Please tell me the number of dryers installed in Europe," the query is transmitted directly to the orchestrator 200 with or without passing through the front server 100 (S71). The orchestrator 200 provides the query message in operation S71 to the LLM server 300 (S72).

The LLM server 300 uses the schema data 65 to generate a database query (analysis code) that provides information on countries within Europe and the number of dryers installed in each country as a result and generates a response format to include the results (S73). In an embodiment, for example, the analysis code executes a database query statement regarding the number of dryers in the "Dryer_Info" table in which "Country_Loc" corresponds to "GB," "FR," or "DE."

For example, the LLM server 300 may generate analysis code, Code, using the schema data 65.

Code ="SELECT COUNT (*) as cnt FROM Dryer_Info WHERE Country _Loc = "GB" OR Country _Loc = "FR" OR Country_Loc = "DE"

In addition, the LLM server 300 may generate a response format as follows:
"The number of dryers installed in Europe is %cnt%."

The LLM server 300 provides the analysis code and the response format to the orchestrator 200 (S74). The orchestrator 200 transmits the analysis code to the code handler, receives the execution results, and applies the results to the response format to generate a response message (S75). For example, it is assumed that the code handler 400 executes the code and returns a result with a cnt value of 3215.

The orchestrator 200 enters the results previously returned to the response format, generates a response message as follows, and transmits the response message to the client device 1 or the front server 100. As a result, the client device 1 may display a message such as "The number of dryers installed in Europe is 3215" as in operation S76

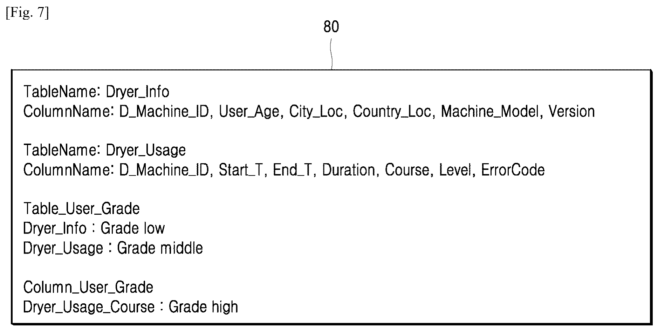

FIG. 7 is a view illustrating a configuration of the schema data including authorization information according to one embodiment of the present invention. Schema data 80 lists each table names Dryer_Info and Dryer_Usage and individual columns of the corresponding tables.

The schema data 80 presents each user's access authority for each table in Table_User_Grade. When the user's authorization level is high/middle/low, Dryer_Info has a "low" level and Dryer_Usage has a "middle" level. In addition, the orchestrator 200 may additionally set access-level grades for specific columns in the table in the schema data 80. In FIG. 7, access to the "Course" column of Dryer_Usage is set to a "high" level.

Accordingly, the orchestrator 200 may include level information corresponding to the identification information of the user logged in to the client device 1 in the query message and provide the query message to the LLM server 300.

The LLM server 300 may compare the user's grade information with the schema data and, when the user attempts to access information that has not been assigned, output a response message such as "You do not have the authority to request the question."

The embodiment of FIG. 7 illustrates an example in which schema data is set to include access authority for tables or fields that constitute a database.

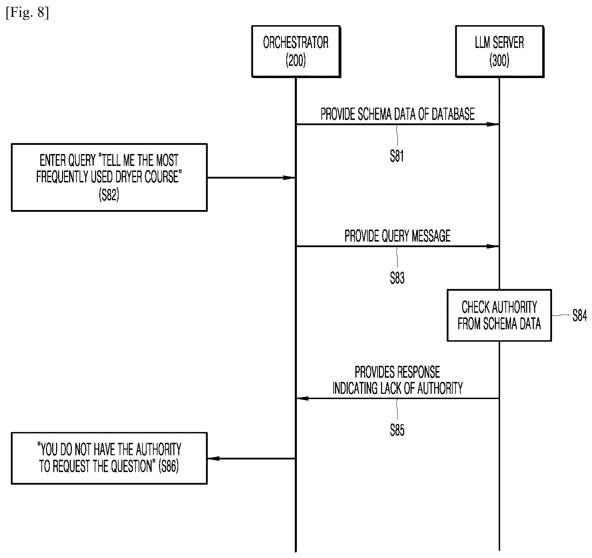

FIG. 8 is a view illustrating a process of checking authorization and answering a query according to one embodiment of the present invention.

The orchestrator 200 provides the schema data 80 in FIG. 7 to the LLM server 300 (S81). Thereafter, when the client device 1 enters a query such as "Tell me the most frequently used dryer course," the query is transmitted directly to the orchestrator 200 with or without passing through the front server 100 (S82). The orchestrator 200 provides the query message in operation S82 to the LLM server 300 (S83).

The LLM server 300 uses the schema data 80 to compare and check the user's authority and the authority for the course (S84). When the user's authority is "low," it is lower than the "high" authority for the course column, the user who asked the question in operation S82 does not have the authority to check the information.

That is, the LLM server 300 uses the schema data 80 to check the authority and provides a response indicating the lack of authority (S85).

The orchestrator 200 provides the response back to the client device 1, and as a result, the client device 1 may display a message, "You do not have the authority to request the question," as in operation S86.

In an embodiment of the present invention, the orchestrator 200 may extract information about the database 1000 and convert the extracted information into a form that may be understood by the LLM server 300.

For example, in addition to the embodiment of FIG. 5, the orchestrator 200 may generate the following sentences:
"The table 'Dryer_Info' has six columns."

"Names of the columns in the 'Dryer_Info' table are D_Machine_ID, User_Age, City_Loc, Country_Loc, Machine Model, and Version."

"D_Machine _ID denotes dryer identification information, and User_Age denotes the age information of a dryer user. City_Loc denotes identification information of the city in which the dryer is disposed, and Country _Loc denotes identification information of the country in which the dryer is disposed. Machine_Model denotes the dryer's model name, and Version denotes the software version installed on the dryer."

In this way, the orchestrator 200 may generate schema data in a natural language format, and this information is transmitted to the LLM server 300 and used in the process in which the LLM server 300 generates analysis code to resolve the user's query.

According to the above embodiments, non-expert users can perform data analysis while simultaneously meeting confidentiality and security requirements for company data. In addition, since the results are provided in natural language, similar to a chatbot, as the response message, the user can easily and quickly obtain analysis results through the chatbot interface without the complex analysis process.

According to the above embodiments, the accessibility of data analysis can be enhanced by using LLMs. Upon implementing the system and method according to various embodiments of the present invention, it is possible to facilitate the data analysis process and enable many people to perform data analysis using natural language. This helps non-majors, non-data professionals, etc. leverage data insights to add value to their work. Various departments may access data accumulated within the company and make data-based decisions.

According to the above embodiments, data security and confidentiality can be enhanced in applying various LLMs. Upon implementing the system and method according to various embodiments of the present invention, the orchestrator 200 provides only the schema of the data to the LLM server 300, thereby maintaining the security of important company data and preventing the leakage of sensitive information requiring confidentiality. As a result, companies can more safely use LLM models for data analysis.

According to the above embodiments, by applying various schema data including metadata to data analysis results, it is possible to enhance user understanding and enhance the efficiency of data analysis and decision-making. Upon implementing the system and method according to various embodiments of the present invention, the data analysis results can be converted into user-friendly natural language and provided. As a result, the user can more easily understand and use the analysis results. This reduces the time required for the user to understand the analysis results, thereby enabling the user to make more informed decisions more quickly.

According to the above embodiments, it is possible to enhance the efficiency of company data-based decision-making processes. Upon implementing the system and method according to various embodiments of the present invention, it is possible to provide the user-friendly interface and immediate analysis results and enhance the efficiency of information-based decision-making within the company. This can increase the speed and accuracy of the company's decision-making process, thereby enhancing the overall productivity and efficiency of the company. Accordingly, companies can use data analysis more easily, safely, and effectively.

In particular, the execution results of analysis code applied to the database may be included in the response message generated in a form that may be understood by the user based on user queries. As described with reference to FIGS. 2 and 3, the orchestrator 200 may provide the response results to the LLM server 300 and receive the response message from the LLM server 300.

Alternatively, as described with reference to FIGS. 4 and 6, the orchestrator 200 may receive the response format from the LLM server 300, and the orchestrator 200 may apply the analysis code to include the execution results in the response format to generate the response message.

Even though all components that constitute various embodiments of the present invention have been described as being and operated, the present invention is not necessarily limited to these embodiments, and one or more of all components may be selectively coupled and operated without departing from the scope of the present invention. In addition, each of the components may be implemented as a single, independent hardware, but some or all of the components may be selectively coupled and implemented as a computer program having program modules that perform some or all of the combined functions of one or more hardware units. The codes and code segments that constitute the computer program can be easily inferred by those skilled in the art. Such a computer program may be stored in a computer-readable storage medium and read and executed by a computer, thereby implementing various embodiments of the present invention. The storage media for computer programs include magnetic recording media, optical recording media, and storage media including semiconductor recording devices. In addition, a computer program implementing various embodiments of the present invention includes program modules transmitted in real time through an external device.

The above description focuses on various embodiments of the present invention, but various changes and modifications may be made within the scope of those skilled in the art. Accordingly, it will be understood that these changes and modifications are included within the scope of the present invention as long as they do not depart from the scope of the present invention.

### DESCRIPTION OF REFERENCE NUMERALS -

| | | | |
|---|---|---|---|
| 100: | front server | 200: | orchestrator |
| 300: | LLM server | 400: | code handler |

## Claims

1. A method of analyzing data using a large language model (LLM), the method comprising:
a first operation of providing, by an orchestrator, a query message including a natural language query to an LLM server and receiving analysis code from the LLM server;
a second operation of providing, by the orchestrator, the analysis code to a code handler and receiving an execution result of the analysis code from the code handler; and
a third operation of providing, by the orchestrator, the execution result of the analysis code to the LLM server and receiving a response message.

2. A method of analyzing data using a large language model (LLM), the method comprising:
a first operation of providing, by an orchestrator, a query message including a natural language query to an LLM server and receiving analysis code and a response format corresponding to the query message from the LLM server;
a second operation of providing, by the orchestrator, the analysis code to a code handler and receiving an execution result of the analysis code from the code handler; and
a third operation of combining, by the orchestrator, the execution result of the analysis code with the response format to generate a response message.

3. The method of any one of claim 1 or 2, wherein the query message is generated by a client device, and the method further comprises receiving the query message through the client device or a front server accessed by the client device, prior to the first operation.

4. The method of claim 3, wherein the first operation includes:
providing, by the orchestrator, the query message to the LLM server and then receiving a keyword for the query message from the LLM server; and
determining, by the orchestrator, whether the client device has authority corresponding to the keyword, and if so, requesting and receiving analysis code corresponding to the query message from the LLM server.

5. The method of any one of claim 1 or 2, further comprises providing, by the orchestrator, schema data of a database to the LLM server.

6. The method of claim 5, wherein the schema data includes tables which constitute the database and names of columns that constitute the tables.

7. The method of claim 6, wherein the schema data includes descriptions of the columns or a range of data which is storable in the columns, and
the schema data includes a hierarchical structure of data stored in the columns.

8. The method of claim 6, wherein the schema data includes access authority to the tables or fields that constitute the database.

9. A system for analyzing data using a large language model (LLM), the system comprising:
an orchestrator configured to provide a query message including a natural language query to an LLM server and receive analysis code from the LLM server; and
a code handler configured to receive the analysis code from the orchestrator and provide an execution result of the analysis code to the orchestrator.

10. The system of claim 9, wherein the orchestrator provides the execution result of the analysis code to the LLM server and receives a response message.

11. The system of claim 9, wherein, during the process of receiving the analysis code, the orchestrator also receives a response format corresponding to the query message from the LLM server, and
the orchestrator combines the execution result with the response format to generate a response message.

12. The system of claim 9, wherein the query message is generated by a client device, and the orchestrator receives the query message through the client device or a front server accessed by the client device.

13. The system of claim 12, wherein, after the orchestrator provides the query message to the LLM server and receives keywords for the query message from the LLM server, the orchestrator determines whether the client device has authority corresponding to the keywords, and if so, the orchestrator requests and receives analysis code corresponding to the query message from the LLM server.

14. The system of claim 9, wherein the orchestrator provides schema data of a database to the LLM server.

15. The system of claim 14, wherein the schema data includes tables which constitute the database and names of columns that constitute the tables.

16. The system of claim 15, wherein the schema data includes descriptions of the columns or a range of data which is storable in the columns, and
the schema data includes a hierarchical structure of data stored in the columns.

17. The system of claim 15, wherein the schema data includes access authority to the tables or fields that constitute the database.
